# EUROPEAN PATENT APPLICATION

(11) **EP 4 790 400 A1**
(43) Date of publication of application: **12.08.2026**
(21) Application number: 24874537.4
(22) Date of filing: 26.09.2024
(51) Int. Cl.: G01N 27/12

(54) **DETECTION DEVICE, DETECTION METHOD, AND PROGRAM**

(30) Priority: 03.10.2023 JP 2023172258
(71) Applicant: Daikin Industries, Ltd., Osaka-shi, Osaka 530-0001 (JP)
(72) Inventor: ARAI, Junichiro, Osaka-Shi, Osaka 530-0001 (JP); TAKEDA, Nobuaki, Osaka-Shi, Osaka 530-0001 (JP)
(74) Representative: Hoffmann Eitle
(86) International application number: PCT/JP2024/034338
(87) International publication number: WO 2025/074932

(57) **Abstract**

A detection apparatus configured to identify and quantify an allergen in a target space includes a controller configured to acquire a plurality of signal patterns detected by a plurality of semiconductor sensors exhibiting relatively different response characteristics to a same gas component; identify or quantify an allergen from the plurality of signal patterns acquired by the plurality of semiconductor sensors; and output a result of the identifying of the allergen or a result of the quantifying of the allergen.

## Description

### TECHNICAL FIELD

The present disclosure relates to a detection apparatus, a detection method, and a program.

### BACKGROUND ART

Allergies caused by airborne allergens affect a large number of people. Typical airborne allergens include pollen, molds (fungi), and house dust (mites). Among these, pollinosis has an especially large patient population in Japan. Because the amount of airborne pollen correlates with both the onset and severity of pollinosis, pollen dispersion has conventionally been measured. In contrast, molds (fungi) and house dust (mites) have traditionally been measured using morphological methods and immunological methods.

A technique for detecting minute particles using a laser has been devised (for example, see Patent Document 1). Patent Document 1 discloses a technique for detecting particles having a desired particle diameter by a simple light receiving means by detecting light diffracted by a particle having a predetermined particle diameter by a laser beam.

### RELATED ART DOCUMENTS

### PATENT DOCUMENT

Patent Document 1: Japanese Unexamined Patent Application Publication No. H07-294415

### SUMMARY OF THE INVENTION

### PROBLEMS TO BE SOLVED BY THE INVENTION

However, with conventional techniques, it is difficult to identify a specific allergen, because particles other than the target allergen may be detected when their sizes are similar to that of the allergen. Consequently, it is also difficult to accurately quantify each allergen.

The present disclosure provides a technique for identifying or quantifying allergens such as pollen, molds, and mites.

### MEANS FOR SOLVING THE PROBLEMS

A detection apparatus according to a first aspect of the present disclosure includes a detection apparatus configured to identify and quantify an allergen in a target space, the detection apparatus including a controller configured to acquire a plurality of signal patterns detected by a plurality of semiconductor sensors exhibiting relatively different response characteristics to a same gas component; identify or quantify an allergen from the plurality of signal patterns acquired by the plurality of semiconductor sensors; and output a result of the identifying of the allergen or a result of the quantifying of the allergen.

According to the first aspect of the present disclosure, allergens such as pollen, mold, and mite can be identified or quantified.

A detection apparatus according to a second aspect of the present disclosure includes the detection apparatus according to the first aspect, wherein a signal pattern of the plurality of signal patterns changes as a gas component is adsorbed onto a semiconductor sensor of the plurality of semiconductor sensors.

A detection apparatus according to a third aspect of the present disclosure includes the detection apparatus according to the second aspect, wherein the signal pattern includes a pattern of current, voltage, electrical conductivity or resistance that changes as the gas component is adsorbed onto the semiconductor sensor.

A detection apparatus according to a fourth aspect of the present disclosure includes the detection apparatus according to the third aspect, wherein the signal pattern includes the pattern of current, voltage, electrical conductivity or resistance that changes as the gas component adsorbed onto the semiconductor sensor is released from the semiconductor sensor.

A detection apparatus according to a fifth aspect of the present disclosure includes the detection apparatus according to the first through fourth aspects, wherein the gas component is introduced into the semiconductor sensor without being pressurized or liquefied.

A detection apparatus according to a sixth aspect of the present disclosure includes the detection apparatus according to the first through fourth aspects, wherein the controller is configured to input the plurality of signal patterns to a model generated by machine learning, thereby identifying or quantifying the allergen in the target space, the model being generated by machine learning a relationship between the plurality of signal patterns of the plurality of semiconductor sensors and a type or amount of an allergen.

A detection apparatus according to a seventh aspect of the present disclosure includes the detection apparatus according to the first through sixth aspects, wherein the plurality of semiconductor sensors include two or more types of semiconductor sensors, the two or more types of semiconductor sensors differing in metal oxide compositions.

A detection apparatus according to an eighth aspect of the present disclosure includes the detection apparatus according to the fourth aspect, wherein the electrical conductivity repeats a cycle of drop and recovery, and the controller is configured to extract a waveform between adjacent local maxima or between adjacent local minima of the electrical conductivity as the signal pattern, repeat extracting the waveform using the signal pattern, and identify or quantify the allergen.

A detection apparatus according to a ninth aspect of the present disclosure includes the detection apparatus according to the eight aspect, wherein the controller is configured to control an environmental device so as to reduce, or prevent an increase in, an amount of the allergen when an amount of the quantified allergen exceeds a threshold value, or when a slope of the amount of the allergen with respect to time exceeds a threshold value.

A detection apparatus according to a tenth aspect of the present disclosure includes the detection apparatus according to the first through ninth aspects, wherein the controller is configured to display a change in the amount of allergen with respect to time for each type of allergen.

A detection apparatus according to an eleventh aspect of the present disclosure includes the detection apparatus according to the first through tenth aspects, wherein the allergen is pollen, molds, or mites.

A detection apparatus according to a twelfth aspect of the present disclosure includes the detection apparatus according to the first through eleventh aspects, wherein the plurality of semiconductor sensors are configured to simultaneously output signals relating to a plurality of gas components, and the controller is configured to acquire the signal patterns including the signals that are simultaneously output by the plurality of semiconductor sensors.

A detection method according to the thirteenth aspect of the present disclosure includes a detection method in which a detection apparatus identifies or quantifies an allergen in a target space, the method including: the controller acquiring signal patterns detected by a plurality of semiconductor sensors exhibiting relatively different response characteristics to a same gas component; the controller identifying or quantifying an allergen from the plurality of signal patterns acquired from the plurality of semiconductor sensors; and the controller outputting a result of the identifying of the allergen or a result of the quantifying of the allergen.

A program according to a fourteenth aspect of the present disclosure includes a program for causing a computer to function as the detection apparatus according to any one of the first through twelfth aspects.

### EFFECTS OF THE INVENTION

The present disclosure can provide a technique for identifying or quantifying allergens such as pollen, molds, and mites.

### BRIEF DESCRIPTION OF THE DRAWINGS

[FIG. 1] FIG. 1 is a diagram for explaining a system configuration of an example of an allergen detection system and an outline of an allergen detection method.
[FIG. 2] FIG. 2 is a diagram illustrating a modified example of the system configuration of the allergen detection system.
[FIG. 3] FIG. 3 is a diagram illustrating an example of the system configuration of the allergen detection system.
[FIG. 4] FIG. 4 is a diagram illustrating an example of a hardware configuration of an information processing apparatus.
[FIG. 5] FIG. 5 is a diagram illustrating an example of a functional block diagram for explaining functions of an information processing apparatus and an environmental device (or sensor unit) in blocks.
[FIG. 6] FIG. 6 is a diagram illustrating total ion chromatograms (TIC) of volatile compounds obtained from 10 mg of pollen of each of Japanese cedar, Japanese cypress, Japanese red pine, and Japanese chestnut.
[FIG. 7] FIG. 7 is a visualized image illustrating an example of a detection principle of a semiconductor sensor.
[FIG. 8] FIG. 8 is a diagram illustrating an example of a signal pattern detected by the semiconductor sensor.
[FIG. 9] FIG. 9 is a diagram illustrating an example of a neural network used for training by a model generator.
[FIG. 10] FIG. 10 is a diagram for explaining training of a neural network.
[FIG. 11] FIG. 11 is a diagram illustrating an example of a neural network used for training an allergen identification model by the model generator.
[FIG. 12] FIG. 12 is a diagram illustrating an example of a sampling method of a signal pattern and resistance values detected by the semiconductor sensor.
[FIG. 13] FIG. 13 is a schematic diagram illustrating training data.
[FIG. 14A] FIG. 14A is a diagram illustrating an example of a time-series signal waveform.
[FIG. 14B] FIG. 14B is a diagram illustrating an example of a bounding rectangle of a signal pattern between adjacent local maxima (or between adjacent local minima).
[FIG. 15] FIG. 15 is a diagram illustrating an example of a model configuration when a neural network corresponding to image data is used.
[FIG. 16] FIG. 16 is a diagram illustrating an example of an allergen detection result screen displayed on a user terminal or a remote controller.
[FIG. 17] FIG. 17 is a diagram illustrating an example of an outdoor pollen detection result screen displayed by a user terminal.
[FIG. 18] FIG. 18 is an example of a sequence diagram for explaining a process in which an allergen detection system causes an allergen detection result screen display to be displayed and controls an environmental device.

### DESCRIPTION OF EMBODIMENTS

Hereinafter, as an example of an embodiment of the present disclosure, an allergen detection system and an allergen detection method performed by the allergen detection system will be described.

### <Supplemental Notes to Allergen Measurement Method>

As many as 47.8 % of people living in Japan feel that they suffer from hay fever (see the following Non-Patent Document 1), and molds (fungi), house dust (mites) and the like are known as typical allergens in addition to pollen. Methods for evaluating environmental allergen contamination are roughly divided into morphological methods and immunological methods. The Durham method (see Non-Patent Document 2) is known as a standard method for the morphological method of pollen. In the Durham method, a preparation coated with petrolatum is exposed outdoors for 24 hours, and the adhered particles are determined by human observation under a microscope as to whether they are pollen or not. The amount of pollen dispersed is indicated by the number of deposited particles per 1 [cm²].

A pollen collector developed by Burkard in the United Kingdom is also known. This pollen collector is based on Hirst's idea (see Non-Patent Document 3). Adhesive tape is affixed to a rotary drum in a chamber exposed to the atmosphere, and the pollen adhering to the tape is manual counted under a microscope.

In recent years, a simpler automatic analyzer has become popular instead of microscopic observation. The pollen observation system provided by the Ministry of the Environment (see Non-Patent Document 4) provides pollen concentration (particles/m³) using a laser-scattering-based pollen counting method. Although this pollen observation system is automated and simple, it has a drawback that particles similar in size to pollen are also measured as pollen (see Non-Patent Document 5).

Therefore, several new analysis methods have been studied. For example, identification of pollen using Coulter counting (see Non-Patent Document 6), Fourier transform infrared absorption (see Non-Patent Document 7), or Raman spectroscopy (see Non-Patent Document 8), which are based on the current change generated when particles pass between two electrodes, have been proposed. In addition, an attempt to measure the concentration of Cry j1 (Ubisch bodies), which is an allergen found in Japanese cedar pollen extracts, by surface plasmon resonance has been promoted (Non-Patent Document 9). In addition, discrimination of pollen types by particle diameter estimated from scattered light of ultraviolet irradiation and the ratio of blue/red fluorescence intensity has been attempted (Non-Patent Document 10). Except for Cry j1, all methods are methods for detecting pollen physically.

As an immunological method, quantification of individual allergens (major allergens) by ELISA (enzyme-linked immunosorbent assay) has been carried out.

However, the standard morphological method (Durham method, rotary drum method) requires microscopic observation and is not suitable for automation. An automatic analyzer improved from the standard method measures particles of similar size as allergens, and it is necessary to periodically remove accumulated allergens from the measuring device, so continuous measurement is impossible, and specificity is low.

The quantification of individual allergens by ELISA as an immunological method has high specificity, but continuous measurement is impossible. A gas analytical method requires a mechanism to prevent new contamination by generated gas and is not suitable for miniaturization. In particular, unlike pollen, morphological methods cannot be used for mites, and automatic analysis techniques are not known.

### <Non-Patent Documents>

- Non-Patent Document 1: Novartis Pharma Limited, "Survey on Pollinosis by Occupation" (survey period: March to April 2020).
- Non-Patent Document 2: O.C. Durham, "The volumetric incidence of atmospheric allergens; a proposed standard method of gravity sampling, counting, and volumetric interpolation of results," J. Allergy, vol. 79, p. 79, 1946.
- Non-Patent Document 3: J.M. Hirst, "An Automatic Volumetric Spore Trap", Annals of Applied Biology, vol. 39, p. 257, 1952.
- Non-Patent Document 4: http://kafun.taiki.go.jp/
- Non-Patent Document 5: Yoda, Shigetoshi et al., "Amount of Japanese cedar pollen entering various parts of the room", Bulletin of the Japanese Society of Otorhinolaryngology, vol. 108, p. 801, 2005.
- Non-Patent Document 6: Z. Zhang et al., "An electronic pollen detection method using Coulter counting principle", Atmospheric Environment, vol. 39, p. 5446, 2005.
- Non-Patent Document 7: C. S. Pappas et al., "New Method for Pollen Identification by FT-IR Spectroscopy", Applied Spectroscopy, vol. 57, p. 23, 2003.
- Non-Patent Document 8: F. Schulte et al., "Chemical Characterization and Classification of Pollen," Analytical Chemistry, vol. 80, p. 9551, 2008.
- Non-Patent Document 9: Q. Wang et al., "Diurnal and Nocturnal Behaviour of Airborne Cryptomeria japonica Pollen Grains and the Allergenic Species in Urban Atmosphere of Saitama, Japan", Asian Journal of Atmospheric Environment, vol. 7, p. 65, 2013.
- Non-Patent Document 10: Mitsumoto, Kotaro et al., "Development of a novel real-time pollen-sorting counter using species-specific pollen autofluorescence", Aerobiologia, vol. 26, p. 99, 2010.

### <Identification and Quantification of Allergens Using Semiconductor Sensors of Present Disclosure>

In consideration of the related art, one of the objects of the present disclosure is to continuously identify or quantify allergens suspended in the air, such as pollen, molds, and mites. In the present disclosure, allergens are detected by semiconductor sensors 11 of two or more kinds that differ in metal oxide compositions. The electrical conductivity (inverse of its resistance value) of the semiconductor sensors 11 changes in response to low-concentration VOCs (volatile organic compounds) contained in a gas that is not pressurized or liquefied. Therefore, the detection apparatus is small enough to be used at home. Since the VOC measurement cycle by the semiconductor sensors 11 is about several minutes and cleaning is unnecessary, it is possible to continuously measure allergens. The measurement can be performed automatically without the need for human intervention. In the present disclosure, because a model generated by learning signal patterns of the semiconductor sensors 11 identifies and quantifies allergens, it is possible to identify and quantify pollen, molds, and mites with high specificity.

### <Terminology>

The term "target space" refers to a space in which air sufficient for human survival exists, such as an indoor living space. The target space may be an outdoor space.

The gas components constituting air are nitrogen, oxygen, water vapor, and trace gases, and VOCs are included among the trace gases. Although pollen and similar substances are not gases, in the present embodiment allergens may be included in one of the gas components. This is because some VOCs are derived from allergens.

Allergens are substances that are suspended in a target space and may cause allergic reactions. The semiconductor sensor detects VOCs on the premise that VOCs are included in the composition of allergens.

Mites include substances derived from mites, such as mite carcasses, feces, and molted shells. Molds may include yeasts and mushrooms. The molds to be detected are mainly hyphae, but spores may also be detected.

### <Outline of Allergen Detection Method>

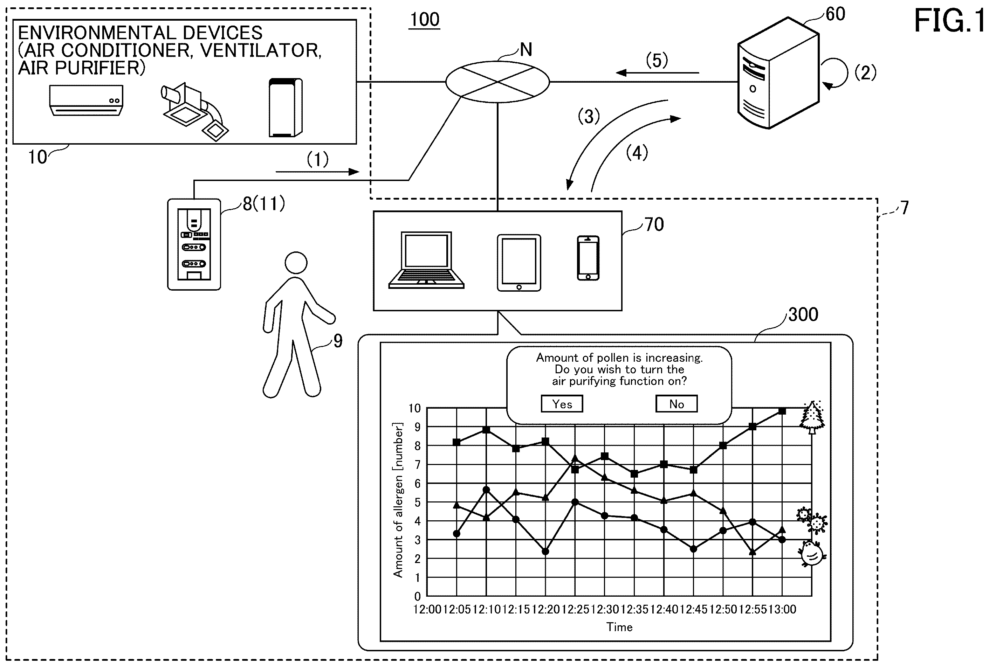

FIG. 1 is a diagram for explaining a system configuration of an example of an allergen detection system 100 and the outline of an allergen detection method. An environmental device 10, a sensor unit 8, a user terminal 70, and an information processing apparatus 60 are communicably connected via a network N.

The sensor unit 8 is preferably installed in each room of a building in which a resident 9 lives. Only one sensor unit 8 may be installed in a building. The sensor unit 8 preferably has an air suction mechanism and incorporates a plurality of semiconductor sensors 11 in an air flow path. The electric conductivity of the semiconductor sensors 11 changes in response to allergens in a target space 7 in which the resident 9 lives.

The environmental device 10 is an apparatus for controlling an environment related to air quality, such as an air conditioner, a ventilator, or an air purifier. The environmental device 10 may have a plurality of functions, such as an air conditioner, a ventilator, or an air purifier, or there may be environmental devices 10 for respective functions.

The user terminal 70 is a terminal device used by the resident 9. A Web browser or a native application is executed on the user terminal 70, and information to be displayed on a display is received from the information processing apparatus 60 via the network N. The resident 9 checks the type and amount of a currently detected allergen and operates the environmental device 10 so that the amount of the allergen is reduced or prevented from increasing. The user terminal 70 can be carried by the resident 9, and need not be installed in the same space as the space where the sensor unit 8 is installed.

In the present disclosure, the information processing apparatus 60 (an example of a detection apparatus) is a server apparatus for performing various information processing. The information processing apparatus 60 generates an allergen quantitative model and an allergen identification model, which are described later, and inputs a signal pattern detected by the semiconductor sensor 11 to the allergen quantitative model and the allergen identification model to identify and quantify an allergen.

The process for identifying and quantifying an allergen will be described hereinafter, on the assumption that the training phase for generating both an allergen quantitative model and an allergen identification model has been completed. As described later, the allergen quantitative model and the allergen identification model output the type and amount of an allergen from a signal pattern detected by the semiconductor sensor 11.
(1) The sensor unit 8 transmits signal data (instantaneous value) detected by the semiconductor sensor 11 to the information processing apparatus 60.
(2) The information processing apparatus 60 accumulates the signal data, and when a signal pattern corresponding to one waveform is obtained, inputs it to the generated allergen quantitative model and allergen identification model, thereby continuously and automatically identifying and quantifying an allergen.
(3) The information processing apparatus 60 transmits, to the user terminal 70, the type and amount of the allergen obtained from the signal pattern. The information processing apparatus 60 also transmits a recommendation to operate the environmental device 10 so as to reduce, or prevent an increase in, the amount of the allergen, according to the obtained allergen amount.
(4) The user terminal 70 displays the type and amount of the allergen and the recommendation to operate the environmental device 10. When the user enters, through the user terminal 70, an operation instruction for operating the environmental device 10, the user terminal 70 transmits a control request for the environmental device 10 to the information processing apparatus 60.
(5) The information processing apparatus 60 converts the control request for the environmental device 10 into control information for the environmental device 10 and transmits the control information to the environmental device 10. Thus, the environmental device 10 can control so as to reduce, or prevent an increase in, the amount of the allergen.

Thus, according to the present disclosure, allergens including pollen, molds, and mites can be continuously and automatically identified and quantified by the semiconductor sensors 11 without increasing the size of the environmental device 10.

### <<Modified Example of System Configuration>>

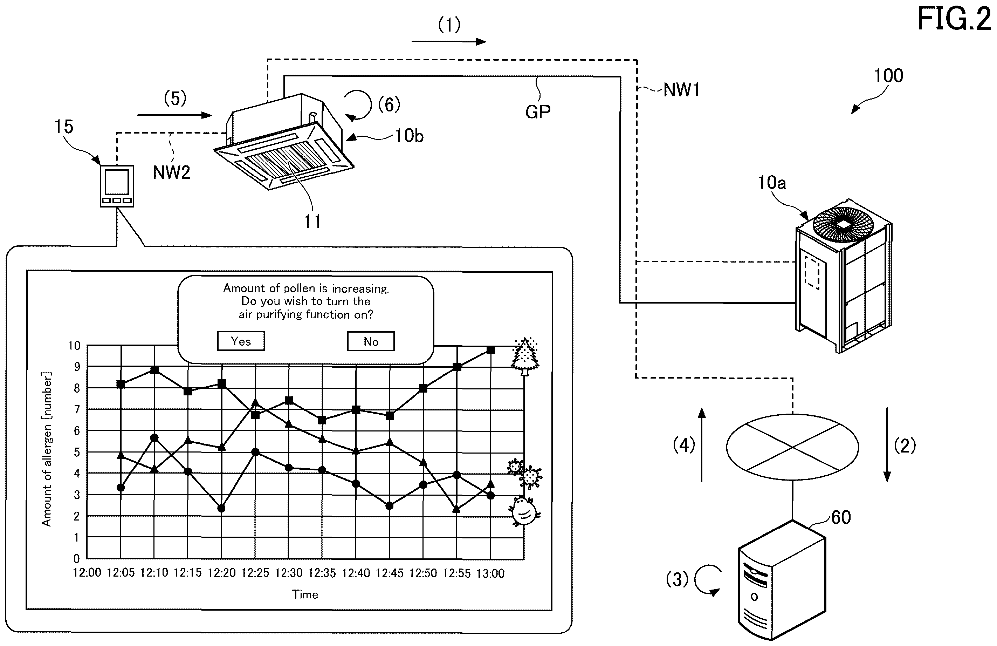

The sensor unit 8 does not exist independently; instead, as illustrated in FIG. 2, the semiconductor sensors 11 may be incorporated into the indoor unit 10b. FIG. 2 illustrates a modified example of the system configuration of the allergen detection system 100. The allergen detection system 100 mainly includes one outdoor unit 10a serving as a heat source unit, one or more indoor units 10b serving as units that utilize the heat source unit, and a remote control device (hereinafter referred to as a "remote controller 15") that functions as an input device for inputting commands related to various settings.

The outdoor unit 10a and the indoor unit(s) 10b are referred to as an air conditioner. A refrigerant circuit is constituted by connecting the outdoor unit 10a and the indoor unit(s) 10b through a refrigerant communication pipe (gas communication pipe GP). In the allergen detection system 100, a plurality of communication networks (Network NW1 and Network NW2) that function as transmission paths for signals between the indoor units and the outdoor units are constructed. The network NW2 may be wired or wireless.

The remote controller 15 is a user interface for receiving settings such as temperature and humidity. The function of the information processing apparatus 60 may be the same as that illustrated in FIG. 1.
(1) The indoor unit(s) 10b incorporates built-in semiconductor sensors 11 in an air inlet or the like. The indoor unit(s) 10b transmits signal data to the outdoor unit 10a.
(2) The outdoor unit 10a transmits signal data to the information processing apparatus 60.
(3) The information processing apparatus 60 accumulates the signal data, and when a signal pattern corresponding to one waveform is obtained, inputs it to the generated allergen quantitative model and allergen identification model, thereby continuously and automatically identifying and quantifying an allergen.
(4) The information processing apparatus 60 transmits the type and amount of the allergen obtained for the signal pattern to the remote controller 15 via the outdoor unit 10a and the indoor unit(s) 10b.
(5) The remote controller 15 displays the type and amount of the allergen. The remote controller 15 displays a recommendation to operate the environmental device 10 so as to reduce, or prevent an increase in, the amount of the allergen, according to the obtained allergen amount. When the user enters, through the remote controller 15, an operation instruction for operating the environmental device 10, the remote controller 15 transmits setting information to the indoor unit(s) 10b.
(6) The indoor unit(s) 10b controls itself based on the setting information. The environmental device 10 can be thereby controlled so as to reduce, or prevent an increase in, the amount of the allergen.

### <System Configuration of Allergen Detection System>

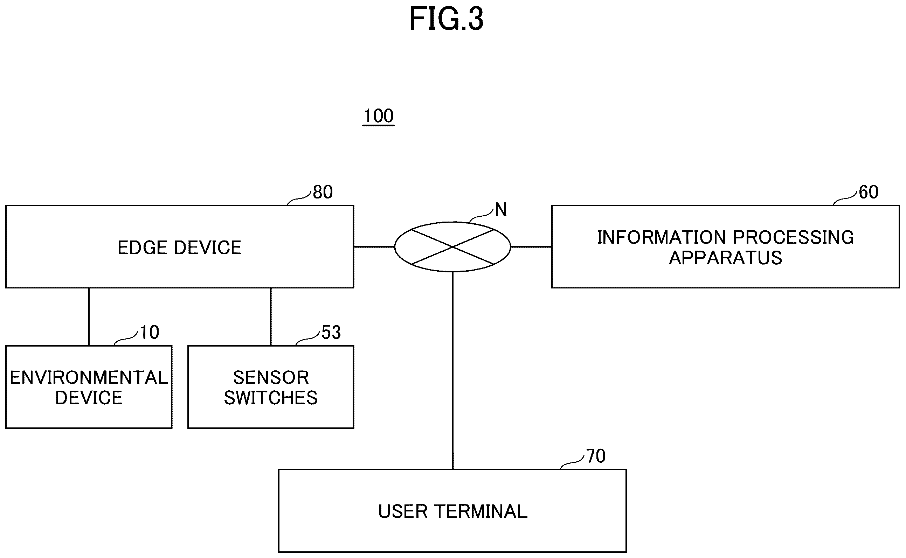

Next, the system configuration of the allergen detection system 100 will be described with reference to FIG. 3. FIG. 3 is a diagram illustrating an example of the system configuration of the allergen detection system 100.

The allergen detection system 100 provides various services utilizing the IoT from managers to general users by having various environmental devices 10 such as air conditioners, ventilators, and air purifiers communicate with the information processing apparatus 60 on the cloud side via the network N. An edge device 80, the environmental device 10, sensor switches 53, and the user terminal 70 are installed on the customer side, and the information processing apparatus 60 is installed in a cloud, such as a data center or the Internet. Since the edge device 80 is an apparatus for centrally managing the environmental device 10 and the sensor switches 53, the edge device 80 is not always required.

As described above, the environmental device 10 is preferably a device that comes into contact with the air in the living space, such as an air conditioner, a ventilator, and an air purifier. The living space may be outside as well as inside. Generally, the edge device 80 may be connected to a security device, a heat source device, a fire alarm, an AHU (air handling unit), a watt-hour meter, a light, and the like.

The environmental device 10 and the sensor switches 53 are controlled by the edge device 80. In other words, the edge device 80 applies a required operation to the environmental device 10 and the sensor switches 53 so as to meet the purpose of the environmental device 10 and the sensor switches 53. Although the content of the control varies depending on the type of the environmental device 10 and the sensor switches 53, for example, when the environmental device 10 is an air conditioner, it may include all controls related to functions of the air conditioner, such as a cooling/heating mode, a set temperature, an air volume, humidity, and a wind direction, which can be generally set in the air conditioner. The sensor switches 53 may include the semiconductor sensors 11.

The environmental device 10 collects operation data related to the environmental device 10 and mainly transmits the operation data to the edge device 80 on a periodic basis. The term "periodic basis" refers, for example, to once per minute, once per ten minutes, or once per sixty minutes, and the transmission interval may be set by the user or by the information processing apparatus 60. The operation data varies depending on the environmental device 10, and, for example, in the case of an air conditioner, there are various data such as high pressure and low pressure of a refrigerant, refrigerant temperature, rotation speed of a fan, and CPU temperature of a microcomputer.

The edge device 80 is a controller for controlling the environmental device 10 and the sensor switches 53. When there is no edge device 80, the information processing apparatus 60 controls the environmental device 10 and the sensor switches 53.

The information processing apparatus 60 may be one or more server devices. Although one information processing apparatus 60 is illustrated in FIG. 3, the information processing apparatus 60 may be divided into several parts assigned with respective functions. The functions of the information processing apparatus 60 may be integrated by one server device. A plurality of information processing apparatuses 60 having the same function may be prepared, and a plurality of information processing apparatuses 60 may perform processing while communicating like a server cluster.

The information processing apparatus 60 inputs a signal pattern to an allergen quantitative model and an allergen identification model, identifies and quantifies allergens, and provides the resulting allergen information to the user terminal 70 or the like. The information processing apparatus 60 is capable of identifying and quantifying allergens not only for individual facilities, such as houses and buildings, but also for broader areas. The allergens identified and quantified in these areas may be shared, for example, via a public broadcast or similar means.

Although not illustrated in FIG. 3, an information processing apparatus for generating an allergen quantitative model and an allergen identification model may exist separately from the information processing apparatus 60. In this case, the allergen quantitative model and the allergen identification model generated by another information processing apparatus are introduced to the information processing apparatus 60. In the present disclosure, it is assumed that the information processing apparatus 60 generates an allergen quantitative model and an allergen identification model for convenience of explanation.

The information processing apparatus 60 may also function as a Web server. In response to a request from client software (Web client), such as a Web browser operated by the user, the Web server provides screen information described in HTML files, XML, CSS files, JavaScript (registered trademark), or similar formats to the client. An application using such a Web mechanism is called a Web application.

It is preferable that the information processing apparatus 60 supports cloud computing. Cloud computing is a use form in which resources on a network are used without being aware of specific hardware resources.

The user terminal 70 is a client terminal for displaying various screens provided by the information processing apparatus 60. The user terminal 70 may be used by an administrator or by a general user (the resident 9 in the present disclosure). When the environmental device 10 is installed in a typical household, the administrator may be a family member of the resident or the resident 9 may also serve as the administrator. When the environmental device 10 is installed in a building or the like managed by a company, the administrator may be, for example, a facility manager.

The user terminal 70 may be, for example, a PC (personal computer), a smartphone, a tablet terminal, a PDA (personal digital assistant), or a wearable PC (e.g., sunglasses, wristwatch, etc.). However, it is sufficient as long as the user terminal 70 has a communication function and operates a Web browser. The user terminal 70 may operate a native application dedicated to the allergen detection system 100 instead of the Web browser.

### <Hardware Configuration of Information Processing Apparatus>

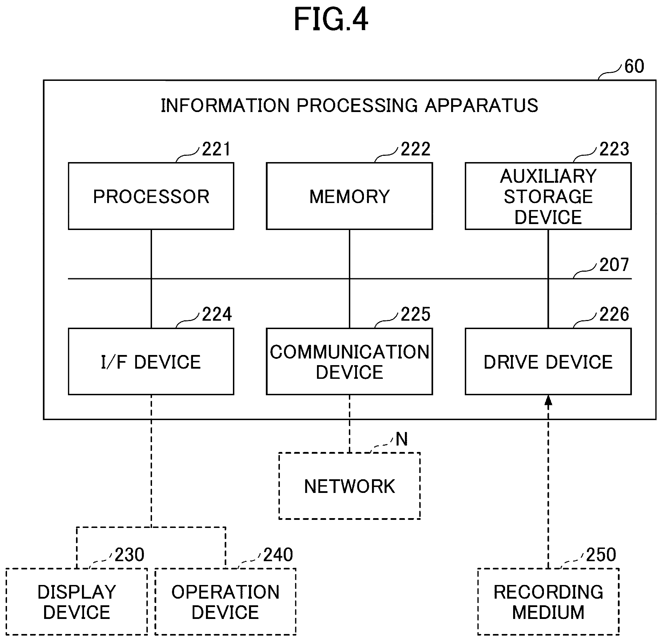

The hardware configuration of the information processing apparatus 60 will be described with reference to FIG. 4. FIG. 4 is a diagram illustrating an example of the hardware configuration of the information processing apparatus 60. As illustrated in FIG. 4, the information processing apparatus 60 includes a processor 221, a memory 222, an auxiliary storage device 223, an interface (I/F) device 224, a communication device 225, and a drive device 226. The hardware components of the information processing apparatus 60 are connected to each other via a bus 207.

The processor 221 includes various arithmetic devices such as a CPU (central processing unit). The processor 221 reads various programs from the memory 222 and executes them. The processor 211 controls the entire information processing apparatus 60.

The memory 222 includes main storage devices such as a ROM (read only memory) and a RAM (random access memory). The processor 221 and the memory 222 form a so-called computer, and the processor 221 executes various programs read from the memory 222.

The auxiliary storage device 223 stores various programs and various data used when the various programs are executed by the processor 221.

The I/F device 224 is a connection device for connecting a display device 230 and an operation device 240, which are examples of external devices, to the information processing apparatus 60. The display device 230 displays the internal state of the information processing apparatus 60. The operation device 240 is used when an administrator of the information processing apparatus 60 inputs various instructions to the information processing apparatus 60.

The communication device 225 is a communication device for communicating with the edge device 80 and the user terminal 70 via the network N.

The drive device 226 is a device for setting the recording medium 250. Herein, the recording medium 250 includes a medium for optically, electrically, or magnetically recording information, such as a CD-ROM, a flexible disk, a magneto-optical disk, or similar recording medium. The recording medium 250 may also include a semiconductor memory for electrically recording information, such as a ROM, a flash memory, etc.

The various programs installed in the auxiliary storage device 223 are installed, for example, when the distributed recording medium 250 is set in the drive device 226 and the various programs recorded in the recording medium 250 are read out by the drive device 226. Alternatively, the various programs installed in the auxiliary storage device 223 may be installed by being downloaded from the network N via the communication device 225.

### <Functions>

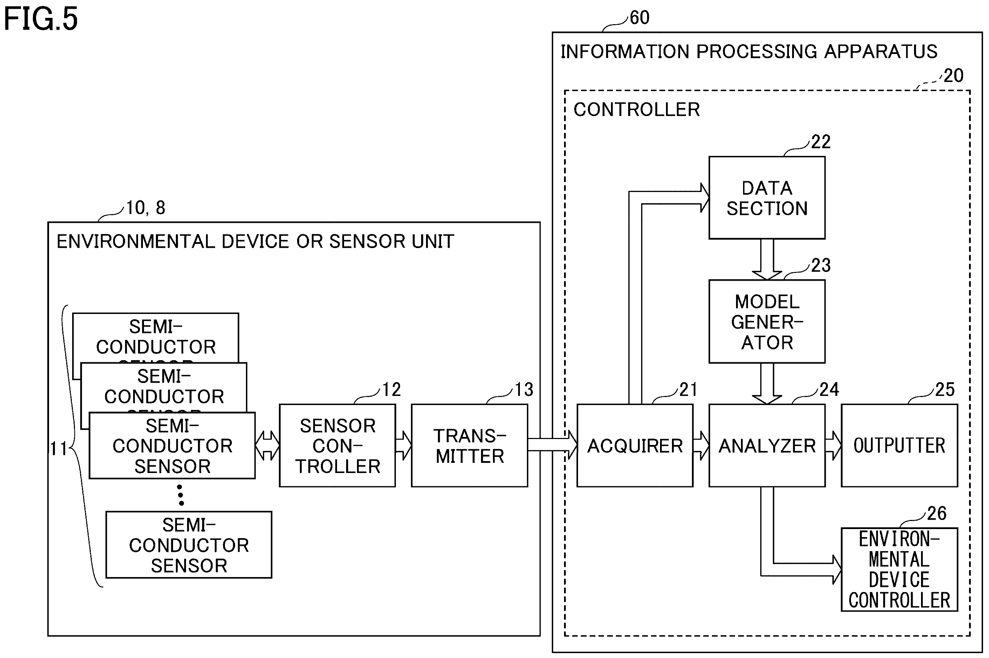

Next, the functional configuration of the allergen detection system 100 will be described in detail with reference to FIG. 5. FIG. 5 is an example of a functional block diagram for explaining the functions of the information processing apparatus 60 and the environmental device 10 (or the sensor unit 8) by dividing them into blocks. FIG. 5 illustrates both the functions in the training phase and the functions in the inference phase for convenience of explanation.

The environmental device 10 or the sensor unit 8 includes the plurality of semiconductor sensors 11, a sensor controller 12, and a transmitter 13. The plurality of semiconductor sensors 11 are respectively arranged at air intake ports or the like of the environmental device 10 or the sensor unit 8. Since the semiconductor material used for the semiconductor sensors 11 for gas is often used in a situation where it is kept at a high temperature in the air, a thermally and chemically stable metal oxide is employed. The electrical conductivity (i.e., resistance value) of the semiconductor sensors 11 changes as VOCs in the air adsorbed onto and desorbed from the semiconductor sensors 11. The plurality of semiconductor sensors 11 are arranged so as to be suitable for detecting different VOCs, and the metal oxide composition of each semiconductor sensor 11 differs accordingly. The plurality of semiconductor sensors 11 exhibit different characteristics with respect to changes in electrical conductivity and related properties for the same gas component.

Examples of the metal oxide compositions of the semiconductor sensors 11 are as follows. Examples of the metal oxide include, but are not limited to, zinc oxide (ZnO), stannic oxide (SnO₂), ferric oxide (Fe₂O₃), tungsten oxide (WO₃), indium oxide (In₂O₃).

The sensor controller 12 controls the plurality of semiconductor sensors 11. The sensor controller 12 generates, for example, a driving voltage and supplies it to the semiconductor sensors 11 to perform operations such as instructing the semiconductor sensors 11 to detect VOCs, taking in a signal from the semiconductor sensors 11, removing noise, filtering, and removing abnormal values.

The transmitter 13 transmits the signal data detected by the semiconductor sensors 11 to the information processing apparatus 60 via the network N in real time or every time a fixed amount is accumulated. Since the information processing apparatus 60 receives the signal data in time series, the signal pattern of each semiconductor sensor 11 can be reproduced.

The information processing apparatus 60 includes an acquirer 21, a data section 22, a model generator 23, an analyzer 24, an outputter 25, and an environmental device controller 26. Each of these units of the information processing apparatus 60 is called a controller 20, and the controller 20 is a function or means implemented by the processor 221 of the information processing apparatus 60 executing instructions of a program loaded into the memory 222.

The acquirer 21 acquires the signal data detected by the semiconductor sensors 11 from the environmental device 10. The acquirer 21 may request the environmental device 10 for the signal data and receive the signal data in response thereto, or may receive the signal data without requesting the signal data. The acquirer 21 may store the signal data in the data section 22. If there is separately prepared labeled data, the model generator 23 can reconstruct a model by using the signal data accumulated in the data section 22 by using the environmental device 10 and the sensor unit 8 operating in the market.

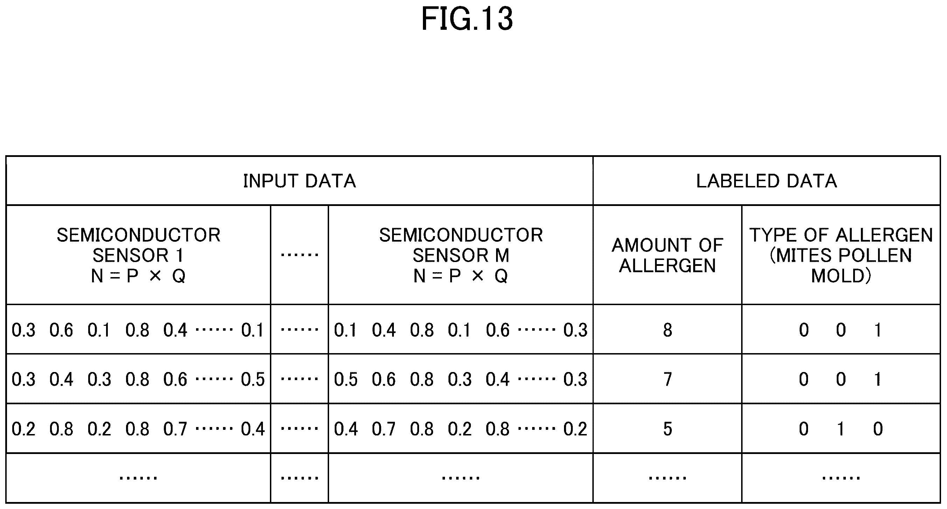

In the training phase, training data are stored in the data section 22. The training data in this embodiment are, for example, "signal pattern and type of allergen" and "signal pattern and amount of allergen". Details of the training data will be described later with reference to FIG. 13.

The model generator 23 learns the training data, generates an allergen identification model from "signal pattern and type of allergen", and generates an allergen quantitative model from "signal pattern and amount of allergen". The generated allergen identification model and allergen quantitative model are set in the analyzer 24.

In the inference phase, the analyzer 24 accumulates signal data detected by the semiconductor sensors 11 in real time, generates one signal pattern, and inputs it to the allergen identification model and the allergen quantitative model. The allergen identification model outputs the amount of the allergen, and the allergen quantitative model outputs the type of the allergen. The analyzer 24 transfers the amount of the allergen and the type of the allergen to the outputter 25 and the environmental device controller 26.

The outputter 25 transmits the type and amount of the detected allergen to the user terminal 70 and the remote controller 15. The outputter 25 may generate screen information, such as HTML displayed by a Web application or a Web page. Since the user terminal 70 and the remote controller 15 display the type and amount of the allergen, the user can operate, for example, an air purifying function by operating the environmental device 10.

The environmental device controller 26 transmits control information for operating the air purifying function of the environmental device 10 to the environmental device 10 when the amount of the allergen exceeds a threshold value or the increase rate of the amount of the allergen exceeds a threshold value. Thus, the environmental device 10 can start operation so as to reduce, or prevent an increase in, the amount of the allergen.

In FIG. 5, the semiconductor sensors 11 and the sensor controller 12 are illustrated on the side of the environmental device 10, and the controller 20 is illustrated on the side of the information processing apparatus 60, but the semiconductor sensors 11 and the controller 20 may be arranged in one apparatus. For example, in a household air conditioner, air purifier, ventilator, or the like, one apparatus may have the semiconductor sensors 11, the sensor controller 12, and the controller 20. When there are an indoor unit and an outdoor unit such as an air conditioner, the indoor unit may have the semiconductor sensors 11 and the sensor controller 12, and the outdoor unit may have the controller 20, or the indoor unit or the outdoor unit may have the semiconductor sensors 11, the sensor controller 12, and the controller 20. In the case of a ventilation type air conditioner, it is desirable that the semiconductor sensors 11 can detect allergens on both indoor and outdoor sides. If the semiconductor sensors 11 are used for both indoor and outdoor sides, the cost increase can be suppressed.

### <Allergen Detection Method Used for Identification and Quantification>

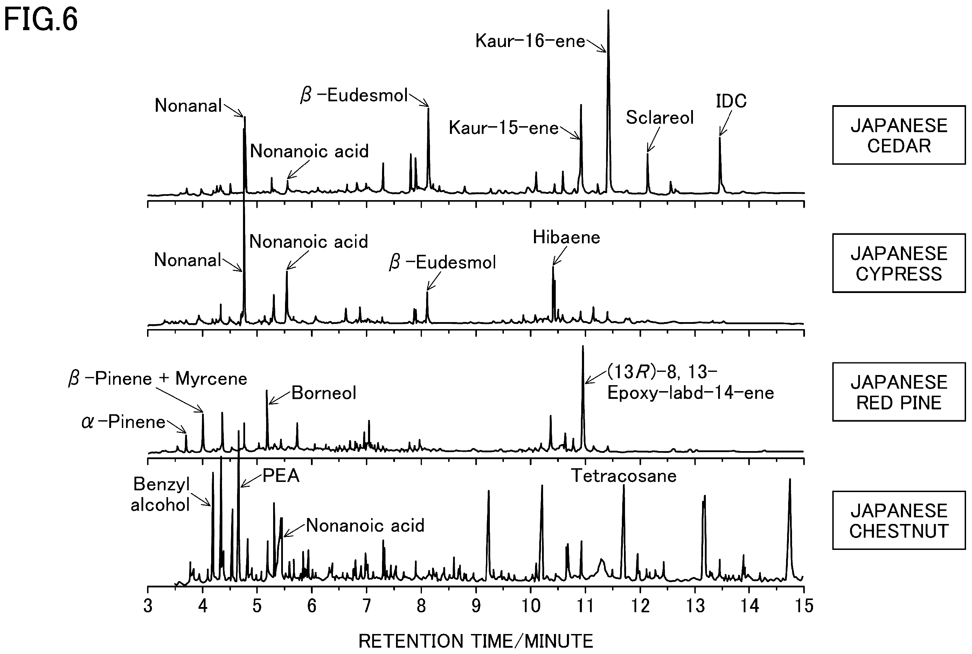

Disadvantages of the conventional gas chromatography mass spectrometry (GC-MS) will be described with reference to FIG. 6. FIG. 6 illustrates total ion chromatograms (TIC) of volatile compounds obtained from 10 mg of pollen of Japanese cedar, Japanese cypress, Japanese red pine, and Japanese chestnut. As illustrated in FIG. 6, in the method of identifying pollen types from VOCs using GC-MS, the type is determined from the difference in retention time from the injection of the sample until the corresponding peak appears. Consequently, a maximum retention time is required for the VOC peak to appear, making this method unsuitable for continuous measurement. Furthermore, because the apparatus requires a mechanism for heating the gas and a mechanism for exhausting the heated gas, it is difficult to reduce the cost or miniaturize the apparatus.

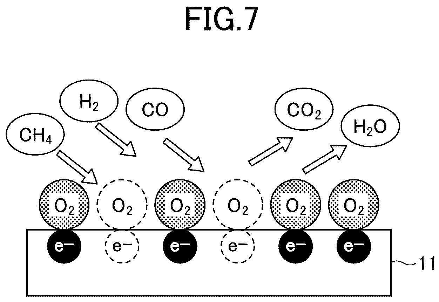

Therefore, as illustrated in FIG. 7, in the present embodiment, allergen are detected by the semiconductor sensors 11. FIG. 7 is an image diagram of the detection principle of the semiconductor sensors 11. As illustrated in FIG. 7, the semiconductor sensor 11 detects gas components by using a reaction between oxygen adsorbed onto the surface of the oxide metal and reducing gases (CH₃, H₂, CO, CO₂, H₂O, etc.). In other words, a reducing gas corresponds to a VOC contained in an allergen, and the electric conductivity of the semiconductor sensor 11 changes as the reducing gas is adsorbed onto and separated from the semiconductor sensor 11. Each of the semiconductor sensors 11 simultaneously outputs signals related to a plurality of gas components.

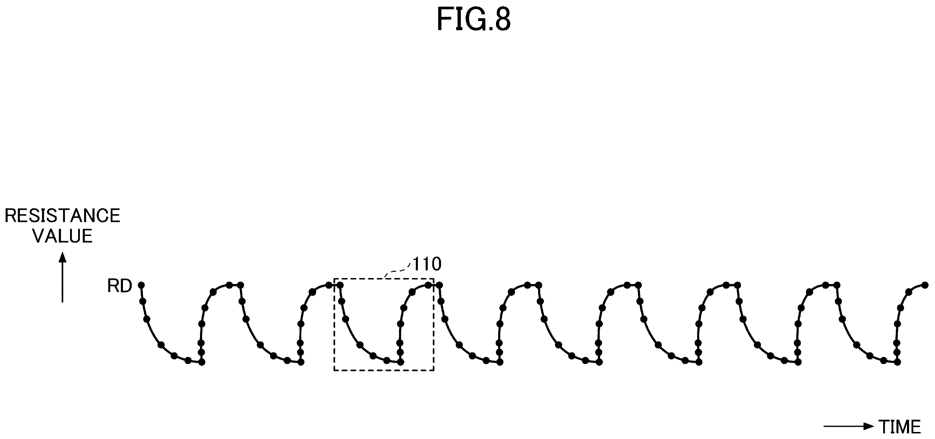

FIG. 8 illustrates an example of a signal pattern 110 detected by a certain semiconductor sensor 11. In FIG. 8, the vertical axis represents a resistance value, and the horizontal axis represents time. The semiconductor sensors 11 assume a state in which no VOC is adsorbed (initial state) as a reference value RD of a resistance value. A resistance value repeats a cycle in which the value decreases due to consumption of adsorbed oxygen in the sensor electron depletion layer as a result of adsorption of a reducing gas, and recovers through the supply of oxygen from the air. The duration of one cycle varies depending on the semiconductor sensor 11 and the type of VOC, but is, for example, several minutes. The semiconductor sensors 11 can measure a sufficient number of resistance values to reproduce a waveform in one cycle.

Since resistance values can be measured continuously in this way, VOCs derived from allergens can be measured continuously. The semiconductor sensors 11 have high sensitivity at low concentrations, and can detect VOCs derived from allergens without pressurizing or liquefying the air. The semiconductor sensors 11 have features of high cost reduction effect in mass production and good responsiveness. Therefore, the environmental device 10 can be miniaturized. By using the semiconductor sensors 11, it is possible to realize the environmental device 10 and the sensor unit 8 which are inexpensive and compact in comparison with the GC-MS.

Although a signal pattern of a resistance value is illustrated in FIG. 8, the signal pattern may be a current, a voltage, an electric conductivity or a resistance (electric resistance). The controller 20 identifies or quantifies an allergen from the signal pattern of the current, the voltage, the electric conductivity or the resistance (electric resistance).

### <Example of Allergens>

As described above, when a VOC derived from an allergen is adsorbed onto the semiconductor sensor 11, the resistance value changes according to the material of the semiconductor sensor 11 and the type (VOC) of the allergen. In other words, each semiconductor sensor 11 detects a different signal pattern according to the type of an allergen. The signal pattern also changes according to the amount of an allergen. Therefore, identification and quantification of an allergen are possible by machine learning the signal patterns detected by the plurality of semiconductor sensors 11.

As examples of allergens, pollen, mites, and molds are known. In addition, the information processing apparatus 60 can discriminate pollen of Japanese cedar, Japanese cypress, rice, Miscanthus sinensis, Helianthus sinensis, Artemisia japonica, Japanese orchardgrass, Japanese red pine, black pine, mugwort, goldenrod, ragweed, Japanese hop, white birch, and ginkgo. The information processing apparatus 60 of the present embodiment can also discriminate types of pollen, mites, and molds.

### <Allergen Identification and Quantitation Using Neural Network>

In the present embodiment, an allergen identification model and an allergen quantitative model are generated by machine learning. Machine learning is a technology for making a computer acquire a human-like learning ability, and refers to a technology in which a computer autonomously generates an algorithm necessary for judgment of data identification or the like from training data taken in beforehand, and predicts new data by applying the algorithm. The machine learning method may be any of supervised, unsupervised, semi-supervised, reinforcement, or deep learning, or a combination thereof, and the choice of learning method is not critical. As an example, an allergen identification model and an allergen quantitative model using a neural network will be described.

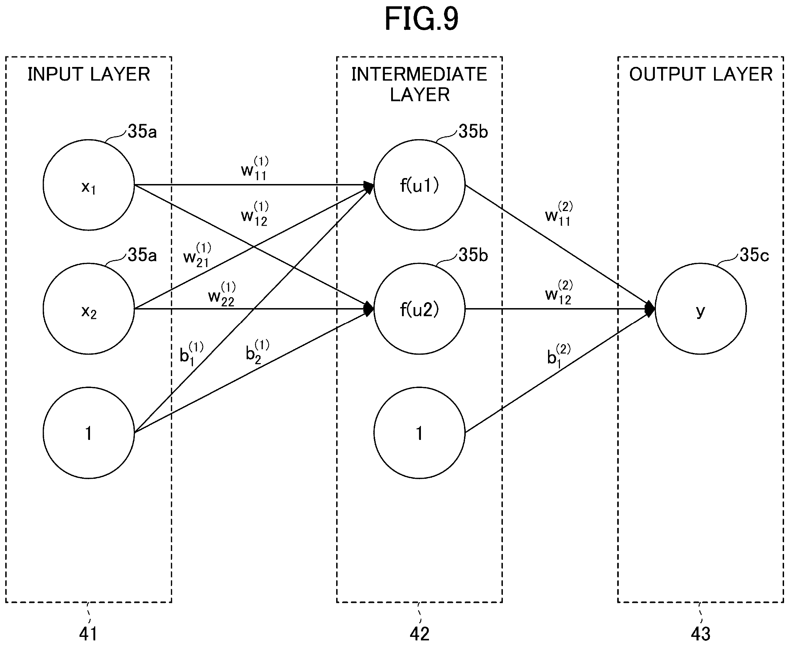

With reference to FIG. 9, an example of a method of creating an allergen quantitative model will be described. FIG. 9 illustrates an example of a neural network used for training by the model generator 23. The neural network illustrated in FIG. 9 is a neural network for regression (prediction of continuous values) that outputs one output value for a plurality of data that input to an input layer 41.

FIG. 9 illustrates a neural network in which L layers (L is the number of weighted intermediate layers 42 and output layers 43; two in the example of FIG. 9) from the input layer 41 to the output layer 43 are all connected. A neural network having a deep layer is called a DNN (deep neural network). A layer between the input layer 41 and the output layer 43 is called an intermediate layer (or hidden layer) 42. The number of intermediate layers 42 and the number of nodes 35a through 35c in each layer are simplified for the purpose of explanation and are merely examples. The number of nodes 35a in the input layer 41 may be the number of elements of a vector which is input data, and the number of nodes 35c in the output layer 43 is often one in the case of prediction of a continuous value. Therefore, allergen quantitative models are created as many as the number of types of allergens.

In the neural network illustrated in FIG. 9, all nodes 35a of the input layer 41 are connected to one node 35b of the intermediate layer 42, and all nodes 35b of the intermediate layer 42 are connected to one node 35c of the output layer 43 (total coupling). The product of the output z of the node 35a of the input layer 41 and the coupling weight w is input to the node 35b of the intermediate layer 42, and the product of the output z of the node 35b of the intermediate layer 42 and the coupling weight w is input to the node 35c of the output layer 43. Expression (1) represents a method for calculating an output signal of the node 35b.
[Math. 1] ${u}_{j}^{\left(l\right)} = {\sum }_{i = 1}^{I} {w}_{ji}^{\left(l,l-1\right)} {z}_{i}^{\left(l-1\right)} + {b}_{j}$ In Expression (1), wⱼᵢ^{(1,1-1)} is a weight between the j-th node of the l-th layer and the i-th node of the (l-1)th layer, and bⱼ is a bias component in the network. uⱼ^{(l)} is an input to the j-th node of the l-th layer, and zᵢ^{(l-1)} is an output of the i-th node of the (l-1)th layer. I is the number of nodes of the (l-1)th layer.
[Math. 2] ${z}_{j}^{\left(l\right)} = f \left({u}_{j}^{\left(l\right)}\right)$ As illustrated in Expression (2), the input uⱼ^{(l)} to the node is activated by the activation function f. f means the activation function of the node. Examples of known activation functions include ReLU, tanh, sigmoid, and the like. The node 35a of the input layer 41 only transmits the input data to the second layer and is not well activated. The node 35 of the l-th layer nonlinearizes the input by the activation function and outputs it to the node 35 of the (l+1)th layer. In the neural network, this process is repeated from the input layer 41 to the output layer 43.

The activation function for the output layer is used for the node 35c of the output layer 43. The activation function of the output layer 43 of the regression model is generally an identity function (y = x).

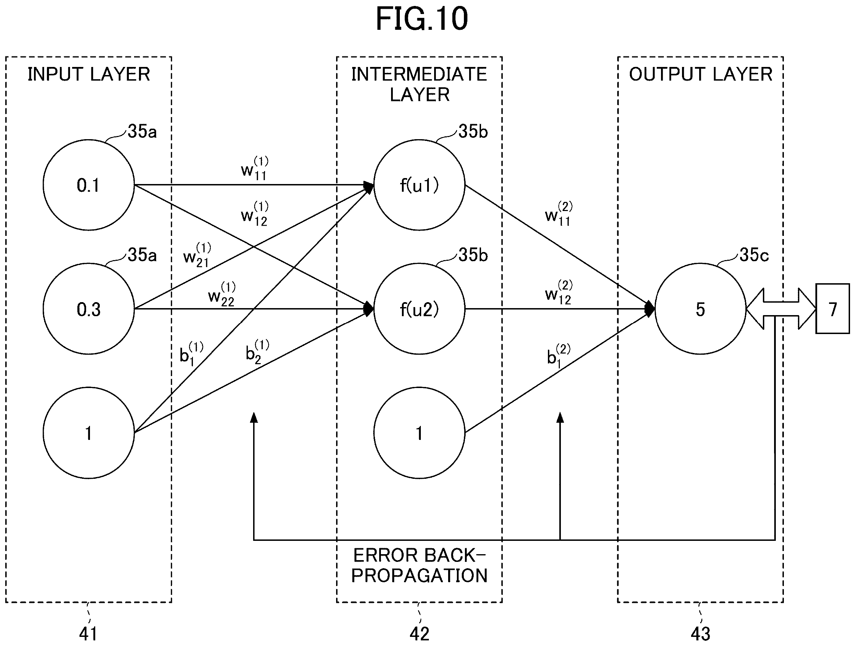

FIG. 10 is a diagram for explaining the training using the neural network. The neural network processes data that is input to the input layer 41 and outputs an output value from the output layer 43. For example, for input data of "0.1" and "0.3", the node 35c of the output layer 43 outputs "5". Assume that labeled data of "7" corresponding to "0.1" and "0.3" are preset in the training data. The labeled data of allergen quantitative models is, for example, an amount of an allergen (number per unit area or volume and per unit time) counted by some method such as the above-mentioned Non-Patent Documents.

In the training phase, the error between the labeled data and the output value is evaluated using a loss function, and weights w and b are adjusted so that the output value becomes close to the labeled data. The loss function of the regression model may be a function for calculating a squared error. The value of the loss function is propagated to the nodes of the input layer 41 by a calculation method called an error back-propagation method. In the process of propagation, weights w and b between the nodes are learned.

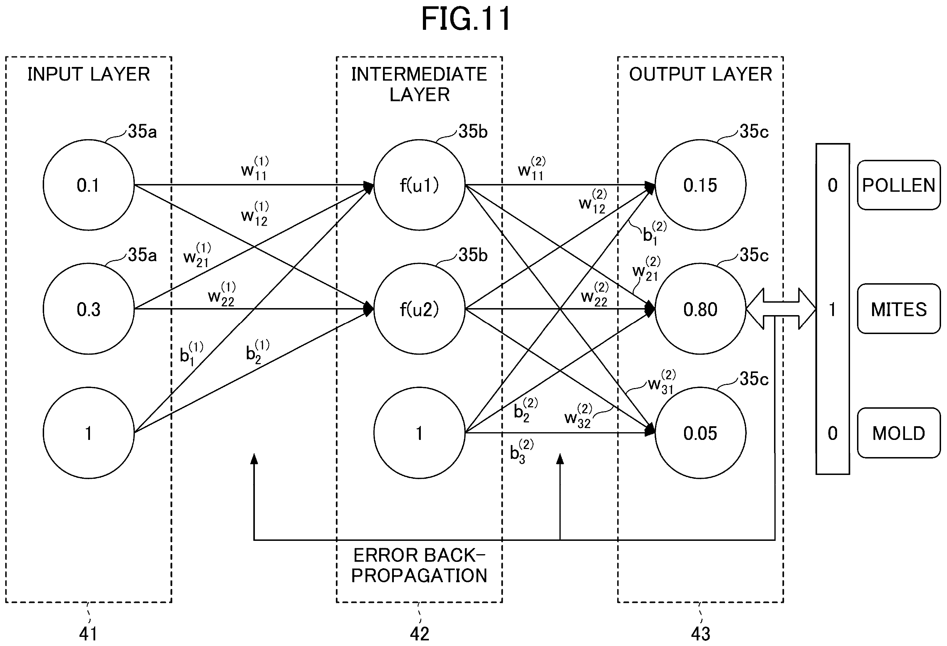

Next, a neural network for identifying allergens will be described with reference to FIG. 11. FIG. 11 illustrates an example of a neural network used by the model generator 23 for training allergen identification models. In the description of FIG. 11, differences from FIG. 9 will be mainly described. The neural network illustrated in FIG. 11 is a neural network for classification, in which the output layer 43 outputs probabilities indicating the likelihood that each set of data input to the input layer 41 corresponds to each allergen.

The configurations of the input layer 41 and the intermediate layer 42 may be the same as those of FIGS. 9 and 10. In the case of classification, a softmax function is often used as an activation function for classification at the node 35c of the output layer 43. The input to each node 35c of the output layer 43 is converted into a probability in a range of 0 to 1 by the softmax function.

For example, for input data of "0.1" and "0.3", the nodes 35c of the output layer 43 output "0.15", "0.80", and "0.05", respectively. Assume that labeled data of "0 1 0" corresponding to "0.1" and "0.3" are preset in the training data. The labeled data for classification may be represented as a one-hot vector. The vector "0 1 0" corresponds to "pollen, mites, mold" in that order. When the input data indicates pollen, the labeled data is "1 0 0"; when mites are detected, the labeled data is "0 1 0"; and when mold is detected, the labeled data is "0 0 1". Therefore, "0 1 0" in FIG. 11 indicates that the labeled data corresponds to mites.

In the training phase, the error between the labeled data and the output value is evaluated by the loss function, and the weights w and b are adjusted so that the output value becomes close to the labeled data. The loss function of a classification model may be a function for calculating cross entropy. The value of the loss function is propagated to the nodes of the input layer 41 by a calculation method called an error back-propagation method. In the process of propagation, weights w and b between the nodes are learned.

### <Pre-Processing of Waveform Data>

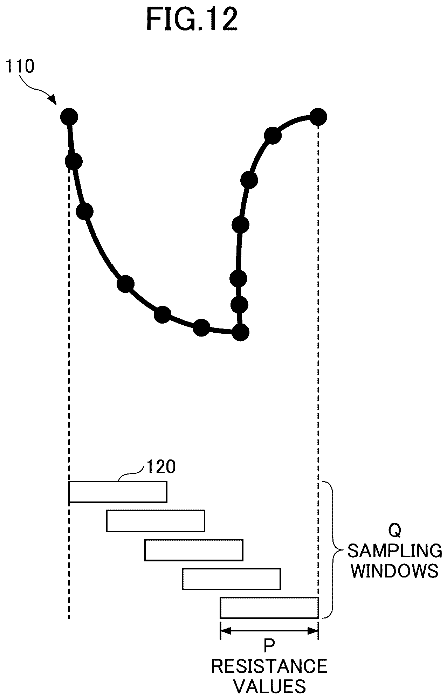

In the present embodiment, input data to the input layer 41 is waveform data detected by the semiconductor sensors 11. FIG. 12 illustrates an example of a signal pattern 110 detected by a certain semiconductor sensor 11. As described above, the signal pattern 110 repeats a cycle of drop and recovery. It is considered that the waveform of one cycle contains a characteristic of how the semiconductor sensor 11 reacts to an allergen. Therefore, the analyzer 24 uses this one cycle (one signal pattern 110) as one input data set to identify and quantify an allergen. However, a half cycle of the signal pattern 110 may be used. This allows an allergen to be identified and quantified in a shorter time.

As illustrated in FIG. 8, the analyzer 24 extracts the signal pattern 110 between adjacent local maxima from the waveform of a continuously obtained signal. Alternatively, a signal pattern between adjacent local minima of the waveform may be extracted. A signal pattern between a local maximum and a local minimum of the waveform may be extracted. Then, as illustrated in FIG. 12, the analyzer 24 samples P values (P is a natural number) from the signal pattern 110 using a sampling window 120. The sampling window 120 is a range (length of time) for sampling signal data from the signal pattern 110. One sampling window 120 acquires, for example, P resistance values. In order to acquire the waveform of the signal pattern 110 without omission, the analyzer 24 moves the sampling windows 120 so as to overlap in time. If the number of sampling windows 120 covering one signal pattern 110 is Q (Q is a natural number), the number (N) of data inputs per one signal pattern 110 is as follows:$N = P \times Q$ The training data is a combination of the input data and the labeled data. As described above, the labeled data may be represented as a one-hot vector indicating an amount of an allergen in regression and a type of an allergen in classification.

FIG. 13 schematically illustrates the training data. One row (one record) illustrated in FIG. 13 is one training data set. The training data is input data and an amount of an allergen, or input data and a type of an allergen. It is preferable that the input data be normalized to a range of 0 to 1 and standardized. A person in charge prepares, in advance, multiple sets of input data, along with the corresponding allergen amounts and types.

The model generator 23 acquires batch-sized training data from the data section 22, and generates an allergen identification model and an allergen quantitative model by repeating each batch for a predetermined number of epochs.

If the number of data sets that are input for one signal pattern 110 is N and the number of semiconductor sensors 11 is M, the number of the nodes 35a of the input layer 41 is N×M.

### <<Method for Using Waveform Data as Image Data>>

In FIGS. 12 and 13, numerical values constituting the signal pattern 110 are used as input data, but the input data may be an image.

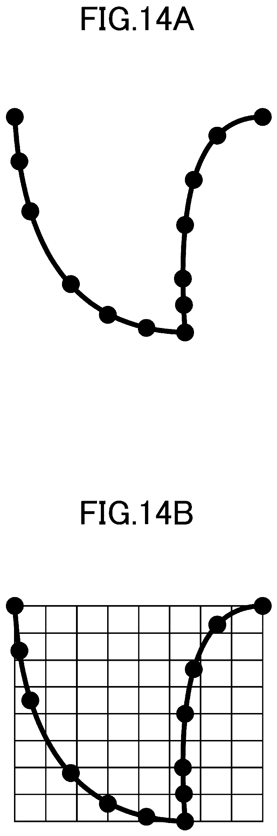

FIGS. 14A and 14B are diagrams for explaining conversion of the signal pattern 110 into image data. As a conversion method into image data, the information processing apparatus 60 draws time-series signals on a graph or the like as illustrated in FIG. 14A during pre-processing. The information processing apparatus 60 preferably maintains a space between data points. As illustrated in FIG. 14B, the information processing apparatus 60 cuts a circumscribed rectangle of the signal pattern 110 between adjacent local maxima (or between adjacent local minima). Preferably, the analyzer 24 forms the image data into square screen data having a fixed number of vertical and horizontal pixels. In the present embodiment, since the color of the image data does not have information on the amount or type of the allergen, the analyzer 24 binarizes the image data.

If image data is used an input, a neural network capable of performing convolution and pooling can be used. A convolution layer has a function equivalent to a filter and can extract various features and patterns in the image, such as the shape of a line. In addition, pooling can reduce the amount of data without losing much information and can achieve a certain degree of invariance with respect to a shift in position.

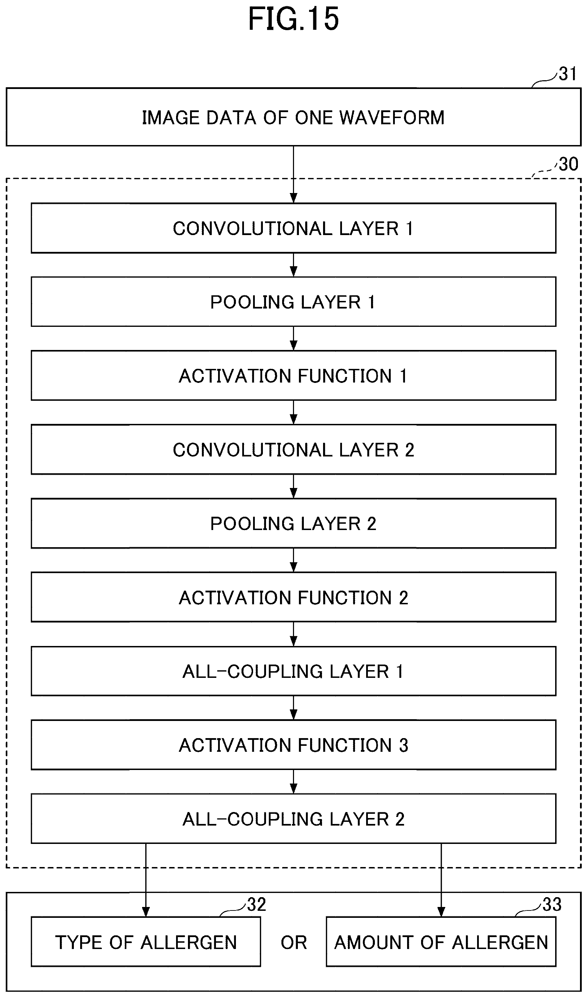

FIG. 15 illustrates an example of a model configuration using a neural network capable of processing image data as an input. A neural network 30 illustrated in FIG. 15 is a neural network called a CNN (convolutional neural network). Screen data 31 of a signal pattern 110 for each semiconductor sensor 11 is input to the neural network 30, and the neural network 30 outputs a type 32 or an amount 33 of an allergen. In FIG. 15, for the purpose of explanation, one neural network 30 outputs a type 32 or an amount 33 of an allergen, but a neural network 30 for outputting a type 32 or an amount 33 of an allergen is separately constructed. For an amount 33 of an allergen, a neural network 30 may be separately constructed for each type of allergen.

The neural network 30 includes convolutional layers 1 and 2, pooling layers 1 and 2, activation functions 1 through 3, and all-coupling layers 1 and 2. In the convolutional layers 1 and 2, a kernel (or filter), which is lattice-shaped numerical data, is applied to each sub-region of the input image (called a 'window') of the same size, and the sum of element-wise products between the kernel and the corresponding pixels is calculated to produce a single numerical value. By sliding the window across the image, the convolutional layers 1 and 2 perform this operation repeatedly to generate a lattice-shaped output (i.e., a tensor) representing extracted features.

In the pooling layers 1 and 2, one numerical value is created from the numerical data in the window. For example, there are maximum value pooling for selecting a maximum value in a window and average value pooling for selecting an average value in a window. The features of the captured image are extracted by the convolution layers 1 and 2, and the strictness of the position of the object is blurred by the pooling layers 1 and 2. The activation functions 1 through 3 are a function for non-linearly converting (activating) the input (examples include ReLU, tanh, and sigmoid). The all-coupling layer 1 corresponds to the input layer 41 for collecting the output of the activation function 2, and the all-coupling layer 2 corresponds to the output layer 43. The numerical values collected by the all-coupling layer 1 are transmitted to the all-coupling layer 2 via the activation function 3. The all-coupling layer 2 has one (quantitative) or a plurality of (identification) output nodes, which output the type of allergen or the amount of allergen.

The numbers of the convolutional layers 1 and 2, the pooling layers 1 and 2, the activation functions 1 through 3, and the all-coupling layers 1 and 2 illustrated are only examples, and the order of processing is only an example.

The training data for the neural network 30 illustrated in FIG. 15 is obtained by replacing the N×M sets of input data illustrated in FIG. 13 with M set of image data. If the resolution of image data converted from one signal pattern 110 is, for example, 100 pixels × 100 pixels and the number of semiconductor sensors 11 is M, the number of nodes 35 of the input layer 41 is 100×100×M. In the case of the neural network 30 illustrated in FIG. 15, the contents of the filter and the coefficients between the nodes of all coupling layers 1 and 2 are adjusted by training.

### <Other Machine Learning Techniques>

Machine learning methods include support vector machines, logistic regression, decision trees, and random forests in addition to neural networks (perceptron, deep learning), and are not limited to the methods described in the present embodiment. For example, support vector machines are mainly used for classification models. Support vector machines are methods for maximizing a plane between the margins of vectors of positive and negative examples included in training data. Non-linear data can also be classified by a kernel method that maps data onto a high-dimensional feature space.

Boosting decision trees are ensemble learning methods in which a plurality of weak discriminators, such as decision trees, are learned and combined to construct a strong discriminator. Prediction results of the plurality of weak discriminators are integrated using majority voting, etc., and a final prediction result of the strong discriminator is output. Although the boosting decision tree is for regression, it can be applied to regression by using a boosting regression tree which is a similar technique.

In addition, there are various techniques suitable for regression and classification, and any technique for generating an allergen identification model and an allergen quantitative model of the present embodiment may be used.

### <Example of Display of Allergen Identification and Quantification>

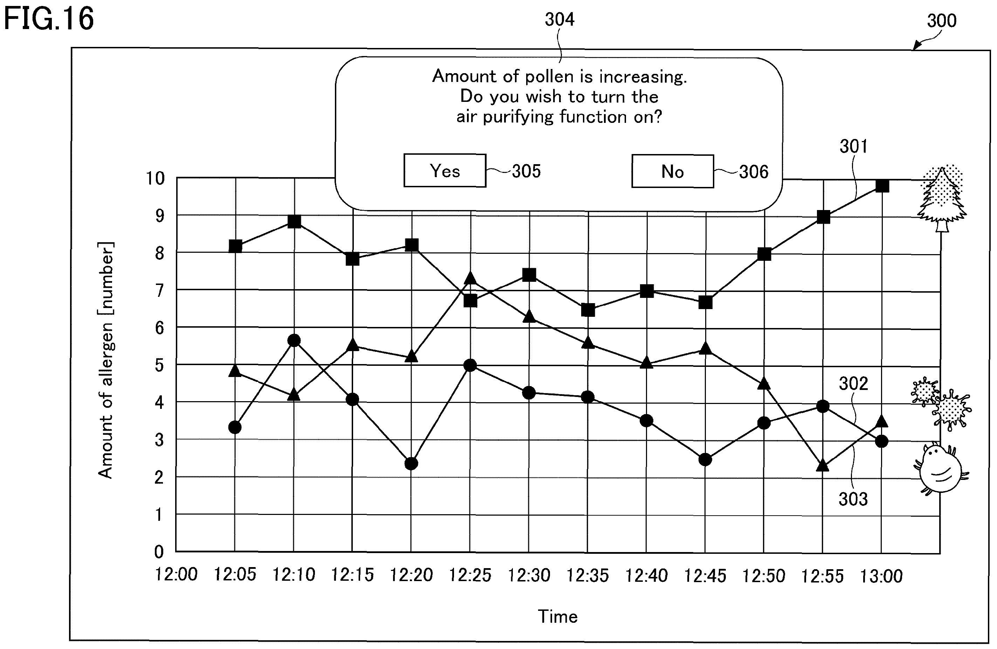

FIG. 16 illustrates the allergen detection result screen 300 displayed by the user terminal 70 or the remote controller 15. In the allergen detection result screen 300, the horizontal axis represents the current time, the vertical axis represents the amount of the allergen, and the change in the amount of the allergen with time is represented by line graphs 301 through 303. Although pollen, mold, and mites are illustrated as allergens in FIG. 16 as an example, the allergen detection result screen 300 may display the number of other types of allergens. The resident 9 can instruct which allergen is displayed by operating the user terminal 70 or the remote controller 15. In the allergen detection result screen 300, when the user designates pollen as an allergen, the number of each type of pollen can be displayed. When the user designates mites, the number of each type of mite can be displayed. When the user designates mold, the number of each type of mold can be displayed. The resident 9 may designate a time range for displaying the line graphs 301 through 303. The allergen detection result screen 300 may display a maximum value and a minimum value of each allergen in a past fixed time.

In the allergen detection result screen 300 of FIG. 16, pollen is rapidly increasing after 12:45. In such a case, the outputter 25 preferably warns the resident 9. In FIG. 16, a message 304, "Amount of pollen is increasing. Do you wish to turn on the air purifying function?", a "Yes" button 305, and a "No" button 306 are displayed. When the resident 9 presses the Yes button 305, the information processing apparatus 60 transmits, for example, control information for operating the air purifier function to the environmental device 10. The environmental device controller 26 may appropriately control the environmental device 10 according to the detection result of the allergen without requesting input from the user.

The outputter 25 may emphasize a line graph indicating an increasing trend, for example, by flashing the line graph or displaying the line graph with a thickened line. When the amount of an allergen is reduced by control of the environmental device 10, the outputter 25 may display a corresponding effect on the allergen detection result screen 300. Accordingly, the resident 9 can confirm that the allergen has been reduced by the control of the environmental device 10.

Since the information processing apparatus 60 of the present embodiment can continuously detect the allergen as described above, it can alert the resident 9 in real time and control the environmental device 10 without delay. When the allergen is reduced by the control of the environmental device 10, it can also be detected in real time, and the resident 9 can be informed of the effect of the air purifying function.

When the environmental device 10 is installed outdoors or can take in outdoor air, the information processing apparatus 60 may provide a map illustrating the distribution of pollen based on the detection result of the allergen (mainly pollen) and positional information of the environmental device 10. The positional information of the environmental device 10 may be determined by an IP address, for example, or the environmental device 10 may transmit a postal code or an address to the information processing apparatus 60.

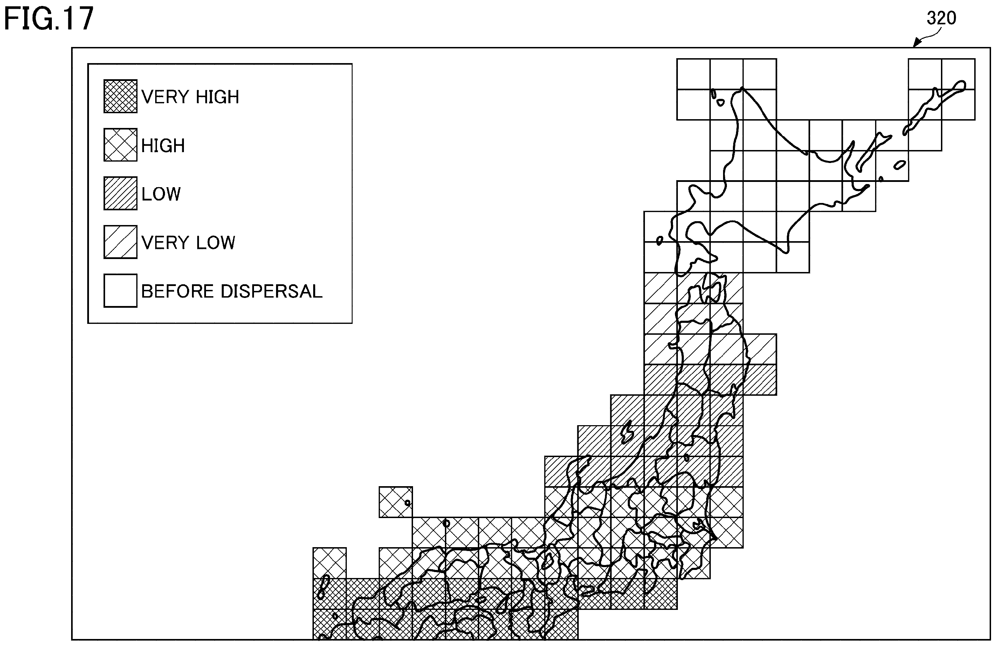

FIG. 17 illustrates an outdoor pollen detection result screen 320 displayed by the user terminal 70. The information processing apparatus 60 can receive an amount of pollen in each area from the environmental device 10. The information processing apparatus 60 divides the map into meshes and obtains an average amount of pollen in the meshes. The information processing apparatus 60 can visually display the amount of pollen for each place by color-coding the meshes according to the amount of pollen. The resident 9 can confirm the amount of pollen scattered when going out to a distant place, for example. The information processing apparatus 60 may provide the amount of pollen in each place to the weather information service.

### <Overall Process Flow>

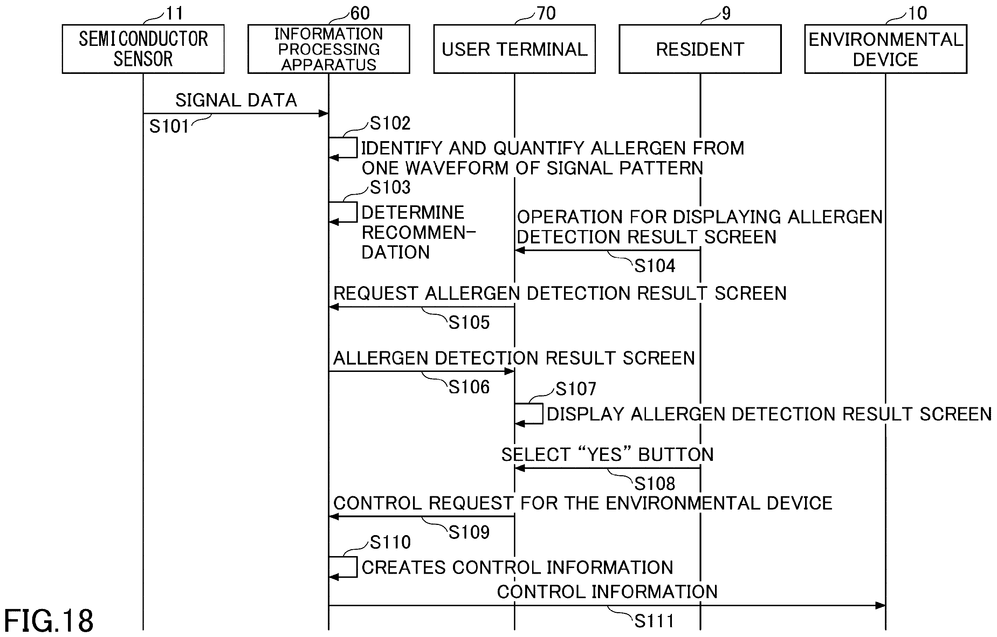

Next, the overall process flow of the allergen detection system 100 will be described with reference to FIG. 18. FIG. 18 is a sequence diagram for explaining a process in which the allergen detection system 100 displays an allergen detection result screen display and controls the environmental device 10.

S101: The acquirer 21 of the information processing apparatus 60 repeatedly acquires signal data measured by the semiconductor sensors 11 from the environmental device 10 or the sensor unit 8, for example, every fixed time or every fixed quantity.

S102: The analyzer 24 of the information processing apparatus 60 extracts a signal pattern 110 for one waveform from the time-series signal data, inputs the signal pattern 110 to the allergen identification model and the allergen quantitative model, and identifies and quantifies an allergen.

S103: The outputter 25 compares the measured amount for each type of an allergen with a threshold value, and determines whether operation of the environmental device 10 is recommended. The outputter 25 calculates a slope of the amount of the allergen with respect to time based on the past allergen quantification results, compares the slope with the threshold value, and determines whether operation of the environmental device 10 is recommended.

S104 and S105: When the resident 9 inputs an operation for displaying the allergen detection result screen 300 to the user terminal 70, the user terminal 70 transmits a request for the allergen detection result screen 300 to the information processing apparatus 60.

S106: In response to the request from the user terminal 70, the outputter 25 of the information processing apparatus 60 creates the allergen detection result screen 300. The outputter 25 transmits screen information of the allergen detection result screen 300 to the user terminal 70. The remote controller 15 may display the allergen detection result screen 300 instead of the user terminal 70, and in this case, the remote controller 15 may display the allergen detection result screen 300 without the resident 9 performing an operation to display the allergen detection result screen 300.

S107: The user terminal 70 receives screen information of the allergen detection result screen 300 and displays the allergen detection result screen 300.

S108 and S109: When the resident 9 inputs an operation to select the "Yes" button 305 on the allergen detection result screen 300, the user terminal 70 transmits a control request for the environmental device 10 to the information processing apparatus 60. When the remote controller 15 displays the allergen detection result screen 300 instead of the user terminal 70, setting information may be transmitted to the environmental device 10.

S110: The environmental device controller 26 of the information processing apparatus 60 creates control information in response to the control request for the environmental device 10 from the user terminal 70. The environmental device controller 26 creates control information such as activating the air purifying function or activating the environmental device 10 if the environmental device 10 is stopped. The environmental device controller 26 may activate the environmental device 10 and further activate the air purifying function.

S111: The environmental device controller 26 transmits the control information to the environmental device 10. Since the environmental device 10 converts the control information into setting information and controls its own device, it can control the space in which the resident 9 lives so as to reduce, or prevent an increase in, the amount of the allergen.

In the processing illustrated in FIG. 18, the environmental device 10 is controlled when the resident 9 presses the "Yes" button 305, but the environmental device controller 26 may control the environmental device 10 according to the determination result in step S103 without asking the resident 9.

### <Main Effects>

As described above, in the present disclosure, VOCs contained in an allergen are detected by the semiconductor sensors 11 of two or more kinds that differ in metal oxide compositions. The electrical conductivity of the semiconductor sensors 11 changes in response to a VOC contained in not pressurized or liquefied gas in a low concentration. Therefore, the detection apparatus is small and can be used at home. Since the VOC measurement cycle by the semiconductor sensors 11 is about several minutes, the allergen can be measured continuously. The measurement can be performed automatically without the need for human intervention. In the present disclosure, a model generated by machine learning of signal patterns of the semiconductor sensors 11 identifies allergens, thereby enabling pollen, molds, and mites to be identified and quantified with high specificity.

### <<Other Application Examples>>

Although the best embodiments for carrying out the present disclosure have been described with reference to examples, the present disclosure is not limited to these examples in any way, and various modifications and substitutions may be made without departing from the gist of the present disclosure.

For example, although the semiconductor sensors 11 are mainly used to detect allergens in the present embodiment, other gas sensors may be used to detect allergens. For example, there are an optical (NDIR) gas sensor using infrared absorption characteristics of gas molecules, a fuel cell type gas sensor using an oxidation reaction generated at a detection electrode, a contact combustion type gas sensor using combustion heat on the surface of a detection element, and other similar sensors.

The configuration such as the example illustrated in FIG. 5 is divided according to main functions in order to facilitate understanding of the processing by the information processing apparatus 60. The present disclosure is not limited by how the information processing apparatus 60 is divided into units of process or how the units of process are named. The processing of the information processing apparatus 60 may be divided into more units according to content of the process. Also, one unit may be divided to include more units.

Also, the apparatus described in the examples only represents one of a plurality of computing environments for implementing the embodiments disclosed herein. In some embodiments, the information processing apparatus 60 includes a plurality of computing devices such as a server cluster. The plurality of computing devices are configured to communicate with each other via any type of communication link, including a network, shared memory, etc., to perform the processing disclosed herein.

Each of the functions of the disclosure described above may be implemented by one or more processing circuits as well as by software processing through the execution of a program. Here, a "processing circuit" herein includes a processor programmed to perform each function by software, such as a processor implemented in an electronic circuit, and devices such as ASICs (application specific integrated circuits), DSPs (digital signal processors), FPGAs (field programmable gate arrays), and conventional circuit modules designed to perform each of the functions described above.

### <Reasons for Effects>

- A first aspect of the present disclosure is to "acquire a plurality of signal patterns detected by a plurality of semiconductor sensors exhibiting relatively different response characteristics to a same gas component; identify or quantify an allergen from the plurality of signal patterns acquired by the plurality of semiconductor sensors; and output a result of the identifying of the allergen or a result of the quantifying of the allergen". Different signal patterns can be therefore obtained for the same gas component, and the different signal patterns contain much information about the allergen. The detection apparatus analyzes the signal patterns, thereby identifying and quantifying the allergen. Since the semiconductor sensor does not require cleaning, it is possible to continuously identify or quantify allergens. Since human intervention in analyzing signal patterns, it is possible to continuously identify or quantify allergens.
- In a second aspect of the present disclosure, the following feature is provided: "a signal pattern of the plurality of signal patterns changes as a gas component is adsorbed onto a semiconductor sensor of the plurality of semiconductor sensors". A signal pattern reflecting the adsorption of the VOC derived from the allergen contained in the gas component is thereby obtained.
- In a third aspect of the present disclosure, the following feature is provided: "the signal pattern includes a pattern of current, voltage, electrical conductivity or resistance that changes as the gas component is adsorbed onto the semiconductor sensor". A signal pattern representing a change in current, voltage, electrical conductivity or resistance reflecting the adsorption of the VOC derived from the allergen is thereby obtained.
- In a fourth aspect of the present disclosure, the following feature is provided: "the signal pattern includes the pattern of current, voltage, electrical conductivity or resistance that changes as the gas component adsorbed onto the semiconductor sensor is released from the semiconductor sensor". A signal pattern representing a change in current, voltage, electrical conductivity or resistance reflecting the desorption of the VOC derived from the allergen is thereby obtained.
- In a fifth aspect of the present disclosure, the following feature is provided: "the gas component is introduced into the semiconductor sensor without being pressurized or liquefied". It is therefore possible to provide a small-sized detection apparatus which does not require pressurization or liquefaction facilities and can be used at home or the like.
- In a sixth aspect of the present disclosure, the following feature is provided: "the controller is configured to input the plurality of signal patterns to a model generated by machine learning, thereby identifying or quantifying the allergen in the target space, the model being generated by machine learning a relationship between the plurality of signal patterns of the plurality of semiconductor sensors and a type or amount of an allergen". It is therefore possible to identify and quantify pollen, mold and mites with high specificity.
- In a seventh aspect of the present disclosure is the following feature is provided: "the plurality of semiconductor sensors include two or more types of semiconductor sensors, the two or more types of semiconductor sensors differing in metal oxide compositions". A plurality of semiconductor sensors can therefore show relatively different response characteristics to the same gas component.
- In an eighth aspect of the present disclosure, the following feature is provided: "the electrical conductivity repeats a cycle of drop and recovery, and the controller is configured to extract a waveform between adjacent local maxima or between adjacent local minima of the electrical conductivity as the signal pattern, repeat extracting the waveform using the signal pattern, and identify or quantify the allergen". The allergen in the target space can be thus identified or quantified if there is a time corresponding to 1 cycle of the signal pattern. Since the signal pattern repeats cycles, the allergen can be continuously measured.
- A ninth aspect of the present disclosure is to "control an environmental device so as to reduce, or prevent an increase in, an amount of the allergen when an amount of the quantified allergen exceeds a threshold value, or when a slope of the amount of the allergen with respect to time exceeds a threshold value". The environmental device can be automatically controlled in accordance with the amount and increase of the allergen.
- A tenth aspect of the present disclosure is to "display a change in the amount of allergen with respect to time for each type of allergen". The amount and increase of the allergen can be therefore visualized by the user and the user is prompted to activate the environmental device.
- In an eleventh aspect of the present disclosure, the allergen that is identified or quantified is "pollen, molds, or mites. Pollen, molds, or mites can be therefore identified.
- In a twelfth aspect of the present disclosure, the following feature is provided: "the plurality of semiconductor sensors are configured to simultaneously output signals relating to a plurality of gas components". The allergen can be therefore identified or quantified without waiting for separation processing, as required in chromatography.

This application claims priority from Japanese Patent Application No. 2023-172258, filed in the Japanese Patent Office on October 3, 2023, and the entire contents of Japanese Patent Application No. 2023-172258 are incorporated herein by reference.

### REFERENCE SIGNS LIST

- 10: Environmental device
- 11: Semiconductor sensor
- 60: Information processing apparatus
- 70: User terminal
- 100: Allergen detection system

## Claims

1. A detection apparatus configured to identify and quantify an allergen in a target space, the detection apparatus comprising:
a controller configured to
acquire a plurality of signal patterns detected by a plurality of semiconductor sensors exhibiting relatively different response characteristics to a same gas component;
identify or quantify an allergen from the plurality of signal patterns acquired by the plurality of semiconductor sensors; and
output a result of the identifying of the allergen or a result of the quantifying of the allergen.

2. The detection apparatus according to claim 1, wherein
a signal pattern of the plurality of signal patterns changes as a gas component is adsorbed onto a semiconductor sensor of the plurality of semiconductor sensors.

3. The detection apparatus according to claim 2, wherein
the signal pattern includes a pattern of current, voltage, electrical conductivity or resistance that changes as the gas component is adsorbed onto the semiconductor sensor.

4. The detection apparatus according to claim 3, wherein
the signal pattern includes the pattern of current, voltage, electrical conductivity or resistance that changes as the gas component adsorbed onto the semiconductor sensor is released from the semiconductor sensor.

5. The detection apparatus according to any one of claims 1 to 4, wherein
the gas component is introduced into the semiconductor sensor without being pressurized or liquefied.

6. The detection apparatus according to any one of claims 1 to 4, wherein
the controller is configured to input the plurality of signal patterns to a model generated by machine learning, thereby identifying or quantifying the allergen in the target space, the model being generated by machine learning a relationship between the plurality of signal patterns of the plurality of semiconductor sensors and a type or amount of an allergen.

7. The detection apparatus according to claim 1, wherein
the plurality of semiconductor sensors include two or more types of semiconductor sensors, the two or more types of semiconductor sensors differing in metal oxide compositions.

8. The detection apparatus according to claim 4, wherein
the electrical conductivity repeats a cycle of drop and recovery, and
the controller is configured to extract a waveform between adjacent local maxima or between adjacent local minima of the electrical conductivity as the signal pattern, repeat extracting the waveform using the signal pattern, and identify or quantify the allergen.

9. The detection apparatus according to claim 8, wherein
the controller is configured to control an environmental device so as to reduce, or prevent an increase in, an amount of the allergen when an amount of the quantified allergen exceeds a threshold value, or when a slope of the amount of the allergen with respect to time exceeds a threshold value.

10. The detection apparatus according to claim 1, wherein
the controller is configured to display a change in the amount of allergen with respect to time for each type of allergen.

11. The detection apparatus according to claim 1, wherein
the allergen is pollen, molds, or mites.

12. The detection apparatus according to claim 1, wherein
the plurality of semiconductor sensors are configured to simultaneously output signals relating to a plurality of gas components, and
the controller is configured to acquire the signal patterns including the signals that are simultaneously output by the plurality of semiconductor sensors.

13. A detection method in which a detection apparatus identifies or quantifies an allergen in a target space, the method comprising:
the controller acquiring signal patterns detected by a plurality of semiconductor sensors exhibiting relatively different response characteristics to a same gas component;
the controller identifying or quantifying an allergen from the plurality of signal patterns acquired from the plurality of semiconductor sensors; and
the controller outputting a result of the identifying of the allergen or a result of the quantifying of the allergen.

14. A program for causing a computer to function as the detection apparatus according to claim 1.
